# EUROPÄISCHE PATENTSCHRIFT

(11) **EP 3 535 072 B1**
(45) Veröffentlichungstag und Bekanntmachung des Hinweises auf die Patenterteilung: **08.04.2020**
(21) Anmeldenummer: 17816404.2
(22) Anmeldetag: 19.10.2017
(51) Int. Cl.: B21L 3/00

(54) **VERFAHREN ZUR HERSTELLUNG EINER FLACHGLIEDERKETTE**
METHOD FOR PRODUCING A FLAT LINK CHAIN
PROCÉDÉ DE FABRICATION D'UNE CHAÎNE À MAILLONS PLATS

(30) Priorität: 03.11.2016 DE 102016121021
(43) Veröffentlichungstag der Anmeldung: 11.09.2019
(73) Patentinhaber: Thiele GmbH & Co. KG, 58640 Iserlohn (DE)
(72) Erfinder: VORWERK, Dirk, 58097 Hagen (DE)
(74) Vertreter: Osterhoff, Utz
(86) Internationale Anmeldenummer: PCT/DE2017/100908
(87) Internationale Veröffentlichungsnummer: WO 2018/082736

(56) Entgegenhaltungen:
- DE-A1- 3 930 842
- DE-A1-102010 013 475
- FR-A- 1 090 302
- GB-A- 605 645
- GB-A- 1 342 235

## Beschreibung

Die vorliegende Erfindung betrifft ein Verfahren zur Herstellung einer Flachgliederkette gemäß den Merkmalen im Oberbegriff von Patentanspruch 1.

In Rede stehende Gliederketten werden insbesondere im Bergbau eingesetzt und hier insbesondere im untertätigen Bergbau. Sie benötigen eine große Festigkeit zur Übertragung der Bewegungsenergie auf Gewinnungsgeräte, beispielsweise als Hobel- oder aber auch als Förderkette. In solchen Kettentrieben laufen die Ketten über Kettenräder angetrieben, insbesondere in einem Obertrum und einem Untertrum.

Hierzu bestehen die Gliederketten aus Horizontalgliedern, die im Einbauzustand im Wesentlichen horizontal verlaufen und Vertikalgliedern, welche im Einbauzustand im Wesentlichen vertikal orientiert verlaufend angeordnet sind. Die Horizontal- und Vertikalglieder sind jeweils für sich als zwei parallel liegende Schenkel auf. Die Schenkel sind an ihren Enden über eine jeweilige Rundung verbunden. In den Rundungen greifen die Horizontal- und Vertikalkettenglieder jeweils ineinander. Während ihres Einsatzes sind die Ketten neben der zu übertragenden Zugkraft, insbesondere auch abrasivem Verschleiß ausgesetzt.

Beispielsweise ist aus der DE 39 30 842 A1 eine Kette bekannt, welche in der Höhe beim Vertikalglied und in der Breite beim Horizontalglied jeweils reduziert ist.

Aus der GB 605,645, welche die Basis für den Oberbegriff des Anspruchs 1 bildet, ist ein Herstellungsverfahren bekannt, bei der ein Profilstab in Axialrichtung gestaucht wird, so dass Bereiche in späteren Rundungen einen vergrößerten Querschnitt aufweisen. Nachteilig hierbei ist, dass zunächst eine elektrische Erwärmung notwendig ist. Ferner können an sich ergebenden Übergangsabschnitten zwischen gestauchter und nicht gestauchter zwischen in Radialrichtung ausgeweiteter und nicht ausgeweitetem Querschnitt Freiformflächen ergeben, die umformtechnisch nicht beeinflussbar sind.

Aus der FR 1 090 302 ist ein Herstellungsverfahren bekannt, bei welchem ein U-förmiges Kettengliedhalbzeug schmiedetechnisch hergestellt wird.

Aufgabe der vorliegenden Erfindung ist es ein Herstellungsverfahren aufzuzeigen, mit dem eine hocheffiziente Flachgliederkette mit guter Formgebungsfreiheit kosteneffizient hergestellt werden kann.

Die zuvor genannte Aufgabe wird erfindungsgemäß mit einem Verfahren zur Herstellung einer Gliederkette gemäß den Merkmalen in Patentanspruch 1 gelöst.

Vorteilhafte Ausgestaltungsvarianten der vorliegenden Erfindung sind in den abhängigen Ansprüchen beschrieben.

Es wird mit dem erfindungsgemäßen Verfahren eine Gliederkette, insbesondere eine Förderkette, beziehungsweise Flachgliederkette bevorzugt für den Einsatz im untertägigen Bergbau hergestellt. Die einzelnen Kettenglieder sind aus einem Stahlwerkstoff hergestellt. Die Kettenglieder sind als Horizontalglieder sowie Vertikalglieder ausgebildet. Jedes Horizontalglied und jedes Vertikalglied weist jeweils parallel zueinander verlaufende Schenkel auf, die endseitig über Rundungen miteinander verbunden sind. Ein jeder Schenkel weist eine geringere Querschnittsfläche auf, gegenüber der Querschnittsfläche der Rundung.

Das erfindungsgemäße Verfahren sieht zur Herstellung eines solchen Kettengliedes nunmehr folgende Verfahrensschritte vor:
- Bereitstellen eines Profilstabs, wobei die Querschnittsfläche des Profilstabes kleiner ist, als der Nenndurchmesser des herzustellenden Kettengliedes,
- Einlegen des Profilstabs in ein Stauchwerkzeug und axiales Stauchen unter zumindest längenabschnittsweiser Vergrößerung der Querschnittsfläche, wobei die Querschnittsfläche im Bereich der späteren Rundungen vergrößert wird,
- Entnahme des gestauchten Kettengliedhalbzeuges und Umformen zu einem Kettenglied sowie Verschweißen von stirnseitigen Enden des zu dem Kettenglied umgeformten Kettengliedhalbzeuges.

Mit dem erfindungsgemäßen Verfahren kann zumindest ein Kettenglied, mithin jedes zweite Kettenglied der Gliederkette, hergestellt werden. Beispielsweise kann dies das Vertikalglied oder das Horizontalglied sein. Auch können sowohl Vertikalglied als auch Horizontalglied mit dem erfindungsgemäßen Verfahren hergestellt werden.

Unter Nenndurchmesser ist der Durchmesser in der Rundung zu verstehen.

Als erfindungswesentlicher Vorteil ist eine bessere Formgebungsfreiheit zu sehen, da sowohl die Querschnittsfläche an den später herzustellenden Rundungen, als auch die Querschnittsfläche an den später herzustellenden Schenkeln individuell, also mit hohen Formgebungsfreiheitsgraden, hergestellt werden können. Dadurch, dass an den Längenabschnitten des hergestellten Kettengliedes mit kleinerer Querschnittsfläche kein Material abgetragen werden muss, ist der Materialeinsatz zu Herstellung eines jeden Kettengliedes geringer.

Das Stauchwerkzeug kann dabei erfindungsgemäß auch ein kombiniertes Umform- und Stauchwerkzeug sein. Der Profilstab weist eine Länge auf, die länger ist als die umlaufende Länge des später herzustellenden Kettengliedes. Der Profilstab ist insbesondere massiv ausgebildet und besonders bevorzugt aus einem Stahlwerkstoff, ganz besonders bevorzugt aus einem härtbaren Stahlwerkstoff. Der Profilstab kann einen runden Querschnitt aufweisen. Er weist jedoch besonders bevorzugt einen von einem runden Querschnitt verschiedenen Querschnitt auf. Beispielsweise ist dies ein rechteckiger Querschnitt mit abgerundeten Ecken.

Dieser bereitgestellte Profilstab wird in das Stauchwerkzeug eingelegt. Im Falle eines kombinierten Umform- und Stauchwerkzeuges wird bei Schließen des Stauchwerkzeugs bereits die Querschnittskontur des Profilstabes umgeformt. Das Stauchwerkzeug weist ein Oberwerkzeug und ein Unterwerkzeug auf, so dass bei geschlossenem Stauchwerkzeug ein zwischen Oberwerkzeug und Unterwerkzeug im Querschnitt geschlossener Formhohlraum mit in Längsrichtung des Formhohlraumes verschiedener Querschnittsfläche vorhanden ist. Mindestens einseitig, bevorzugt beidseitig, wird sodann eine Stauchbewegung insbesondere durch einen jeweiligen Stempel ausgeführt. Die Stauchbewegung wird in Axialrichtung des Profilstabs ausgeführt. Dabei fließt gestauchtes Material des Profilstabs in den Raum mit größerer Querschnittsfläche. Nach Abschluss des Stauchvorganges ist aus dem gestauchten und umgeformten Profilstab ein Kettengliedhalbzeug hergestellt. Die Länge des Kettengliedhalbzeuges entspricht im Wesentlichen der umlaufenden Länge des herzustellenden Kettengliedes. Mindestens ein Längenabschnitt, bevorzugt zwei Längenabschnitte des Kettengliedhalbzeuges weisen eine vergrößerte Querschnittsfläche auf. Die zwei Längenabschnitte entsprechen den später hergestellten Rundungen der Kettenglieder.

Das Kettengliedhalbzeug wird dann aus dem Stauchwerkzeug entnommen und umgeformt zu einem Kettenglied, insbesondere einem Vertikalglied beziehungsweise Horizontalglied. Die zwei Enden, insbesondere die Stirnseiten der Enden, werden durch den Umformprozess stoßweise aneinandergedrückt und verschweißt. Hierzu kann beispielsweise ein Laserschweißen aber auch ein Widerstandsschweißen durchgeführt werden. Alternativ kann auch ein Reibschweißvorgang durchgeführt werden.

Die Längenabschnitte mit der vergrößerten Querschnittsfläche bilden die Rundungen des Kettengliedes aus. Die Längenabschnitte mit demgegenüber geringerer Querschnittsfläche bilden die Schenkel aus.

Die Querschnittfläche der hergestellten Schenkel entspricht dabei bevorzugt der Querschnittsfläche des Profilstabs. Die Querschnittskontur der hergestellten Schenkel kann der Querschnittskontur des Profilstabs entsprechen. Die Querschnittskontur des hergestellten Schenkels kann jedoch auch durch den Umformvorgang des Kettengliedhalbzeuges zu dem Kettenglied und/oder durch den Umformvorgang von dem Profilstab zu dem Kettengliedhalbzeug geändert sein.

Insbesondere kann die Querschnittsfläche vergrößert werden, so dass diese von der Querschnittsfläche des bereitgestellten Profilstabs abweicht. Die Vergrößerung der Querschnittsfläche in den Längenabschnitten der herzustellenden Rundung ist jedoch relativ bezogen größer, im Vergleich zu einer Vergrößerung der Querschnittsfläche im Bereich der Schenkel.

Weiterhin besonders bevorzugt wird der Profilstab im warmen Zustand gestaucht. Besonders bevorzugt kann auch das Kettengliedhalbzeug zu dem jeweiligen Kettenglied im warmen Zustand umgeformt werden.. Optional ist es weiterhin vorstellbar, dass das umgeformte und verschweißte Kettenglied vergütet wird.

Auch vorstellbar ist, dass das Stauchen im kalten Zustand durchgeführt wird, bzw. bei Raumtemperatur.

Mit dem erfindungsgemäßen Verfahren ist es weiterhin möglich, dass die vergrößerte Querschnittsfläche entlang des Längenabschnittes gleich ist. Durch diese Maßnahme ist es möglich, bei insbesondere gleicher vergrößerter Querschnittsfläche eine Rundung an dem späteren Kettenglied zu erzeugen, die über den Verlauf entlang der Rundung die gleiche Querschnittsfläche aufweist.

Weiterhin ist es vorstellbar, dass die vergrößerte Querschnittsfläche entlang des Längenabschnittes variiert. Bei einer durch das Stauchen variierenden vergrößerten Querschnittsfläche ist es möglich, eine Rundung herzustellen, die über den Verlauf entlang der Rundung ebenfalls eine variierende Querschnittsfläche aufweist. Mit dieser Maßnahme ist wiederum die Möglichkeit der Formgebung für das herzustellende Kettenglied gegenüber den aus dem Stand der Technik bekannten Verfahren deutlich erweitert. Insbesondere kann die Querschnittfläche der Rundung unter den Aspekten der Gewichtseinsparung und Kraftübertragung optimiert hergestellt werden.

Weiterhin besonders bevorzugt wird zwischen dem jeweiligen Längenabschnitt mit gleichbleibender Querschnittsfläche und dem Längenabschnitt mit vergrößerter Querschnittsfläche ein Übergangsabschnitt ausgebildet. Der Übergangsabschnitt ist dann an dem hergestellten Kettenglied ein Übergangsabschnitt zwischen Schenkel und Rundung.

Das Kettengliedhalbzeug wird insbesondere rotationssymmetrisch hergestellt. Damit an dem hergestellten Kettenglied kein wellenförmiger beziehungsweise stufenförmiger Übergang ausgebildet ist, insbesondere an einem außen umlaufenden Rand, findet die umformtechnische Bearbeitung des Kettengliedhalbzeuges zu dem Kettenglied derart statt, dass der herzustellende Schenkel und der Übergangsbereich in Radialrichtung des umlaufenden Randes des Kettengliedes nach außen gedrückt wird. Glatt bedeutet nicht eben oder plan. Vielmehr bedeutet dies im Rahmen dieser Erfindung, dass an dem außen umlaufenden Rand des Kettengliedes kein Stufenabsatz und/oder Wellenabsatz ausgebildet ist.

Das Kettengliedhalbzeug wird alternativ durch den Stauchvorgang rotationssymmetrisch hergestellt.

Die mit dem erfindungsgemäßen Verfahren hergestellte Gliederkette wird nachfolgend beispielhaft weiter beschrieben.

Die Gliederkette wird insbesondere in der Fördertechnik und hier ganz besonders bevorzugt im Bergbau, insbesondere im untertätigen Bergbau eingesetzt. Die einzelnen Kettenglieder sind aus einem Stahlwerkstoff hergestellt und die Gliederkette weist als Kettenglieder Horizontalglieder und Vertikalglieder auf. Jedes Horizontalglied und jedes Vertikalglied verfügt über jeweils parallel zueinander verlaufende Schenkel, wobei die Schenkel endseitig über je eine Rundung miteinander verbunden sind.

Ein jeder Schenkel weist eine geringere Querschnittsfläche auf, gegenüber einer Querschnittsfläche einer jeden Rundung. Dies ist sowohl bei den Horizontalgliedern als auch bei den Vertikalgliedern ausgebildet.

Erfindungsgemäß zeichnet sich die Gliederkette dadurch aus, dass die jeweilige Querschnittsfläche der Schenkel des Horizontalgliedes eine geringere Breite aufweist, bei gleicher oder verringerter Höhe in Relation zu der Querschnittsfläche der Rundung und dass weiterhin die jeweilige Querschnittsfläche der Schenkel des Vertikalgliedes eine geringere Höhe aufweist, bei gleicher oder verringerter Breite in Relation zu der Querschnittsfläche der Rundung des Vertikalgliedes.

Durch die verringerte Querschnittsfläche in den Schenkeln im Vergleich zur Rundung wird zunächst realisiert, dass die damit hergestellte Gliederkette leichter ist, gegenüber einer vergleichbaren Gliederkette mit gleicher Querschnittsfläche in den Schenkeln. Es kann auch eine verringerte Querschnittsfläche in den Schenkeln nur eines Kettengliedes, entweder Horizontalglied oder Vertikalglied ausgebildet sein.

Die zu übertragende Zugkraft ist aufgrund der Querschnittsabnahme in den Schenkeln nicht beeinflusst. Mithin steht die volle aufgrund der Querschnittsfläche der Rundung mögliche zu übertragende Zugkraft zur Verfügung. Der im Betrieb der Gliederkette auftretende Verschleiß reduziert sich aufgrund des geringen Eigengewichtes der Gliederkette. Durch die geringeren Querschnittsflächen, insbesondere im Bereich der Schenkel, kann gleichzeitig Materialaufwand zur Herstellung der Gliederkette eingespart werden, weshalb auch die Materialkosten sinken.

Weiterhin besonders bevorzugt ist ein Übergangsbereich von der Querschnittsfläche des Schenkels zu der Querschnittsfläche der Rundung am Ende eines jeweiligen Schenkels beginnend ausgebildet, insbesondere ab dem Ende eines jeweiligen Schenkels. Besonders bevorzugt ist dies bei dem Horizontalglied ausgebildet. Der Übergangsbereich erstreckt sich dann vorzugsweise in der Seitenansicht über einen Winkel größer 0°, insbesondere größer 3°, bevorzugt 4°, besonders bevorzugt größer 5° bis kleiner 45°. Beispielsweise kann der Übergangsbereich sich auch nur über einen Winkel größer 0° bis kleiner 35°, insbesondere kleiner 30°, bevorzugt kleiner 25° und besonders bevorzugt kleiner 20° erstrecken. Ab hier beginnt dann die Rundung bzw. die Querschnittsfläche der Rundung. Bevorzugt ist insbesondere beim Horizontalglied die Querschnittsfläche über die gesamte Rundung konstant ausgebildet.

Insbesondere bei dem Horizontalglied ist der Übergangsbereich als Anschlag für einen Mitnehmer, beispielsweise einen Mitnehmer eines Kratzerförderers ausgebildet.

Damit die Gliederkette durch Führungsvorrichtungen insbesondere über Kettenräder laufen kann, ist bevorzugt der Hüllkreis der Querschnittsfläche des Schenkels in einem Hüllkreis der Querschnittsfläche der Rundung liegend.

Weiterhin bevorzugt ist eine absolute Höhe des Horizontalgliedes größer als eine Höhe des Vertikalgliedes. Die Höhe des Horizontalgliedes ist dabei in Horizontalrichtung bemessen, die Höhe des Vertikalgliedes in Vertikalrichtung. Die Angaben Höhe und Breite beziehen sich jeweils auf das Kettenglied, nicht auf die Einbaulage.

Weiterhin bevorzugt ist die Querschnittsfläche des jeweiligen Schenkels von einer kreisrunden Kontur verschieden. Insbesondere betrifft dies die Querschnittsfläche des Schenkels des Vertikalgliedes, als auch die Querschnittsfläche des Schenkels eines Horizontalgliedes. Besonders bevorzugt kommt hier eine im Wesentlichen jeweils rechteckige Querschnittskonfiguration mit abgerundeten Ecken zum Einsatz. Eine jeweilige Außenseite des Schenkels ist im Querschnitt besonders bevorzugt abgerundet, insbesondere einer Kontur der Rundung im Querschnitt folgend.

Weiterhin besonders bevorzugt ist die Querschnittskontur des Schenkels des Horizontalgliedes an einer Innenseite flach ausgebildet. Bevorzugt sind auch die Seitenflächen im Querschnitt flach ausgebildet. Die jeweiligen Eckübergänge sind abgerundet ausgebildet. Alternativ ist es möglich, dass die Seitenflächen als zweiteilig in einem Winkel zueinander verlaufende Flächen ausgebildet sind.

Die Querschnittskontur des Schenkels des Vertikalgliedes ist insbesondere rechteckig ausgebildet. Auf die Vertikalrichtung bezogen in Einbaulage des Vertikalgliedes erstreckt sich die längere Seite des Rechteckes in Horizontalrichtung und die kürzere Seite in Vertikalrichtung. Die jeweiligen Eckübergänge sind auch hier bevorzugt abgerundet ausgebildet.

Weiterhin besonders bevorzugt kann die Querschnittsfläche der Rundung selbst entlang der Rundung variieren. Insbesondere wird dies beim Vertikalglied ausgebildet. Der Rundung folgend ergibt sich somit jeweils eine variierende Querschnittsfläche.

Besonders bevorzugt ist dies derart ausgebildet, dass die jeweilige Querschnittsfläche von einer Mittelebene, in Seitenansicht der Rundung folgend, bis zu einem Winkel zwischen 45° und 80° zunehmend ausgebildet ist. Bei Erreichen der maximalen Zunahme der Querschnittsfläche im oben genannten Winkelbereich nimmt dann die Querschnittsfläche zum Schenkel hin bzw. zum Übergangsbereich wieder ab. Insbesondere erfolgt hierbei eine optimale Auslegung des Vertikalgliedes bei Umlenkung und Kraftübertragung auf einem Kettenrad.

Weitere Vorteile, Merkmale und Eigenschaften der vorliegenden Erfindung sind Gegenstand der nachfolgenden Beschreibung. Bevorzuge Ausgestaltungsvarianten sind in den Figuren dargestellt. Diese dienen dem einfacheren Verständnis der Erfindung.

Es zeigen:
- Figur 1: einen Teil einer Gliederkette mit Horizontalglied in Seitenansicht und Vertikalglied in Draufsicht,
- Figur 2: die Ansicht aus Figur 1 mit Vertikalglied in Seitenansicht und Horizontalglied in Draufsicht,
- Figur 3: eine Schnittansicht durch ein Horizontalglied gemäß Schnittlinie A-A aus Figur 1 und
- Figur 4: eine Schnittansicht gemäß Schnittlinie B-B aus Figur 2,
- Figur 5a und b: ein erfindungsgemäßes Stauchwerkzeug in Seitenansicht und Stirnansicht,
- Figur 6a und b: das erfindungsgemäße Stauchwerkzeug im geschlossenen Zustand,
- Figur 7: ein Kettengliedhalbzeug in Draufsicht,
- Figur 8: ein damit hergestelltes Kettenglied in Seitenansicht,
- Figur 9: ein Kettengliedhalbzeug gemäß Figur 7 in Seitenansicht und
- Figur 10: eine Stirnansicht auf das Kettengliedhalbzeug gemäß Figur 7

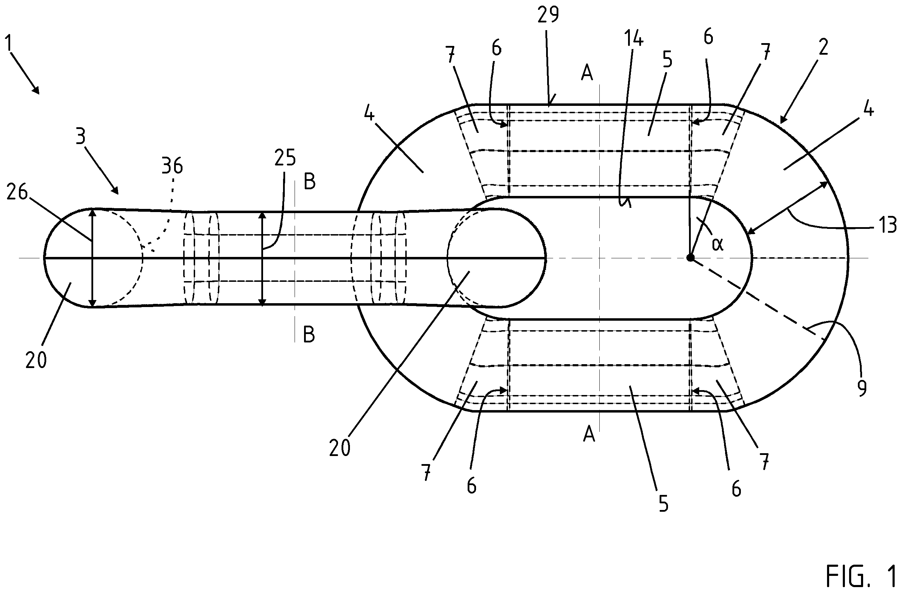

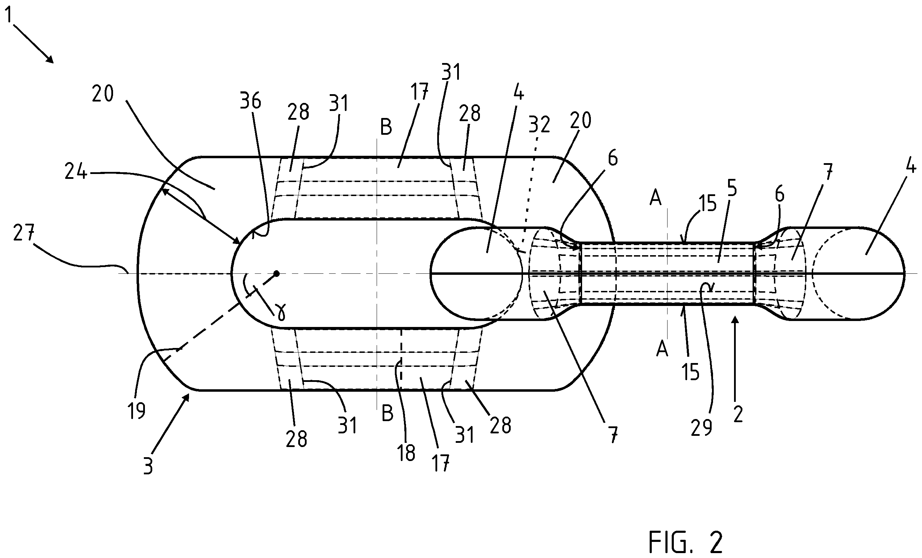

Figur 1 und 2 zeigen einen jeweiligen Ausschnitt aus einer Gliederkette 1 mit einem Horizontalglied 2 und einem Vertikalglied 3. Dabei zeigt Figur 1 das Horizontalglied 2 in Seitenansicht und das Vertikalglied 3 in Draufsicht und Figur 2 das Vertikalglied 3 in Seitenansicht und das Horizontalglied 2 in Draufsicht. Nicht näher dargestellt gliedern sich dann auf die Bildebene bezogen rechts ein weiteres Vertikalglied, gefolgt von einem Horizontalglied usw. an. Auf die Bildebene bezogen links gliedern sich ein Horizontalglied gefolgt von einem weiteren Vertikalglied und folgend an.

Das Horizontalglied 2 weist jeweils endseitig eine Rundung 4 auf, die in der Mitte über einen jeweiligen Schenkel 5 verbunden sind. Die beiden Schenkel 5 verlaufen parallel zueinander. Von einem Ende 6 des Schenkels 5 an erstreckt sich ein Übergangsbereich 7 zu der Rundung 4 hin. Erfindungsgemäß ist bevorzugt vorgesehen, dass der Schenkel 5 über seinen Verlauf die gleiche Querschnittsfläche 8 aufweist. Der Übergangsbereich 7 erstreckt sich ab dem Ende 6 in einem Winkel α von größer 0° bis zu einem Winkel kleiner 45°, so dass dann der Schenkel 5 in die Rundung 4 übergeht. Bevorzugt weist die Rundung 4 eine jeweilige Querschnittsfläche 9 auf, die über den Verlauf der Rundung 4 gleich ist.

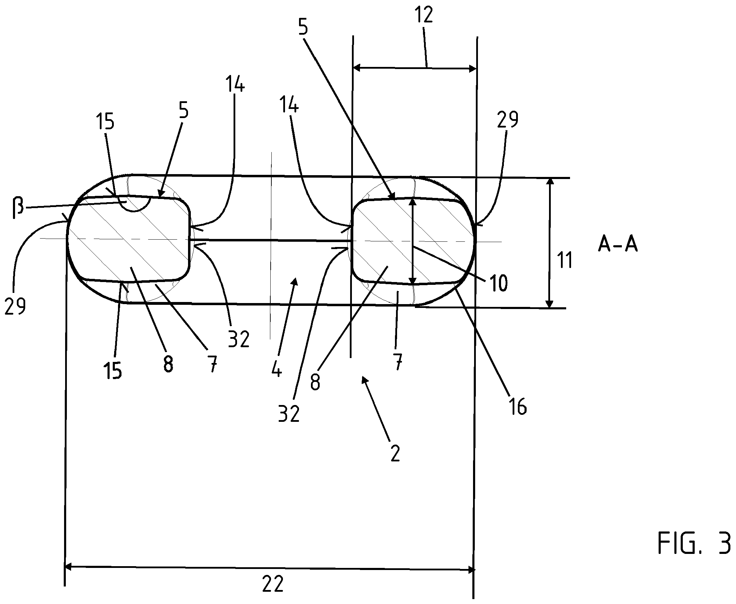

Die Schnittansicht A-A ist dargestellt in Figur 3. Die Querschnittsfläche 8 des jeweiligen Schenkels 5 ist gegenüber einer Querschnittsfläche 9 der Rundung 4 kleiner ausgebildet. Insbesondere ist die Breite 10 im Bereich des Schenkels 5 kleiner als die Breite 11 der Rundung 4 ausgebildet. Die Höhe 12 des Schenkels 5 ist kleiner oder gleich der Höhe 13 der Rundung 4 ausgebildet. Eine Innenseite 14 im Bereich des Schenkels 5 ist bevorzugt flach ausgebildet. Die Innenseite 32 der Rundung 4 ist bevorzugt im Querschnitt gebogen, insbesondere rund ausgebildet. Eine Seitenfläche 15 kann ebenfalls flach ausgebildet sein. Die Seitenfläche 15 kann jedoch auch zweigeteilt flach ausgebildet sein, wobei zwei Flächen in einem Winkel β zueinander verlaufen. Dieser Winkel β ist insbesondere stumpf ausgebildet in einem Winkelbereich kleiner 180° und größer 150°. Weiterhin bevorzugt ist ein Hüllkreis 16 um die Querschnittsfläche 8 des Schenkels 5 herum kleiner gleich der Querschnittsfläche 9 der Rundung 4 ausgebildet. Die Außenseite 29 des Schenkels 5 ist im Querschnitt abgerundet ausgebildet.

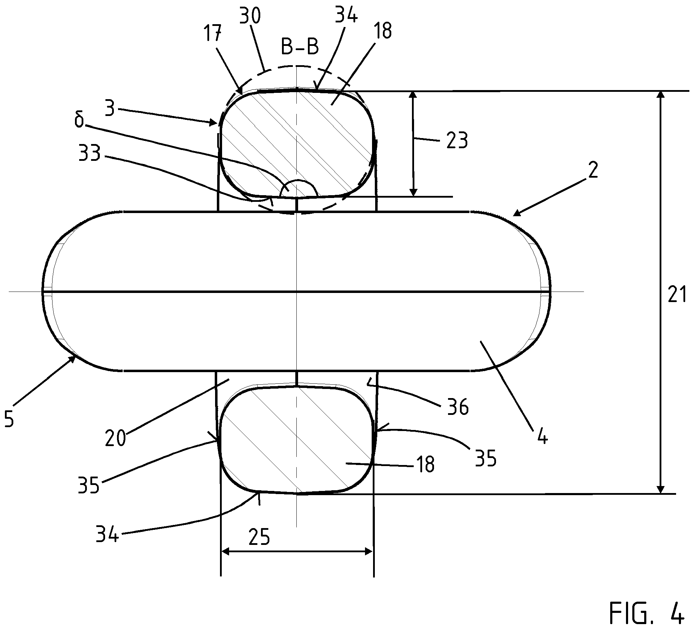

Figur 4 zeigt eine Schnittansicht entlang der Schnittlinie B-B aus Figur 2. Das Vertikalglied 3 weist hier im Bereich seiner Schenkel 17 eine Querschnittsfläche 18 auf, die kleiner ist als eine Querschnittsfläche 19 im Bereich der Rundung 20 des Vertikalgliedes 3. Zunächst ist im Vergleich zu Figur 3 zu erkennen, dass die absolute Höhe 21 des Vertikalgliedes 3 kleiner ist als die Höhe 22 des Horizontalgliedes 2. Die Höhe 23 des Schenkels 17 des Vertikalgliedes 3 ist kleiner als die Höhe 24 der Rundung 20 des Vertikalgliedes 3. Die Breite 25 des Schenkels 17 des Vertikalgliedes 3 entspricht im Wesentlichen der Breite des Vertikalgliedes 3 bzw. der Breite 26 der Rundung 20 des Vertikalgliedes 3, kann jedoch auch kleiner sein. Auch hier erstreckt sich ein jeweiliger Übergangsbereich.

Die Querschnittsfläche 19 des Vertikalgliedes 3 variiert entlang der Rundung 20. Von einer Mittelebene 27 aus nimmt die Querschnittsfläche 19 bis zu einem Winkel γ zunächst zu. Der Winkel γ liegt insbesondere zwischen 45° und 80°. Danach nimmt die Querschnittsfläche 19 der Rundung 20 des Vertikalgliedes 3 in Richtung zu dem Schenkel 17 wieder ab und geht dann auf die Querschnittsfläche 18 des Schenkels 17 über. Die Querschnittsfläche 18 des Schenkels 17 kann konstant über den Verlauf des Schenkels 17 bis zu dessen Ende 31 sein. Auch hier sind Übergangsbereiche 28 von Rundung 20 zu Schenkel 17 ausgebildet, in denen sich der Querschnitt ändert.

Die Innenseite 33 der Schenkel 17 ist bevorzugt abgeflacht, insbesondere flach ausgebildet. Auch kann die Innenseite zweigeteilt durch zwei in einem Winkel δ zueinander ausgebildete Flächen sein. Der Winkel δ liegt bevorzugt zwischen 180° und 150°.

Auch eine Außenseite 34 der Schenkel 17 ist bevorzugt abgeflacht, insbesondere flach ausgebildet. Die Seitenflächen 35 können im Querschnitt gewölbt, jedoch auch wie hier dargestellt flach ausgebildet sein. Die Ecken sind im Querschnitt bevorzugt abgerundet ausgebildet.

Eine Innenseite 36 der Rundung 20 ist bevorzugt im Querschnitt abgerundet, insbesondere rund ausgebildet.

Der Hüllkreis 30, in dem die Querschnittsfläche 18 der Schenkel 17 liegt ist kleiner gleich der Querschnittsfläche 19 der Rundung 20.

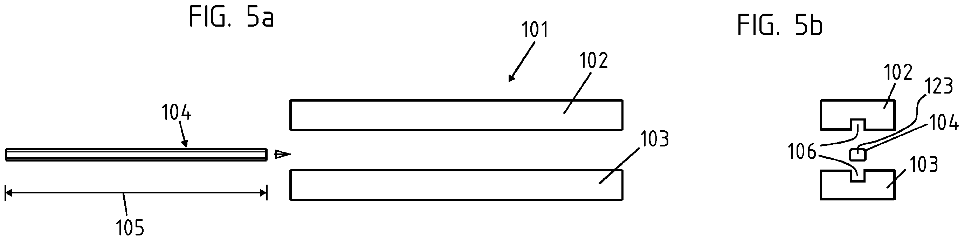

Figuren 5a und 5b zeigen ein Stauchwerkzeug 101 mit einem Oberwerkzeug 102 und einem Unterwerkzeug 103 in geöffnetem Zustand.

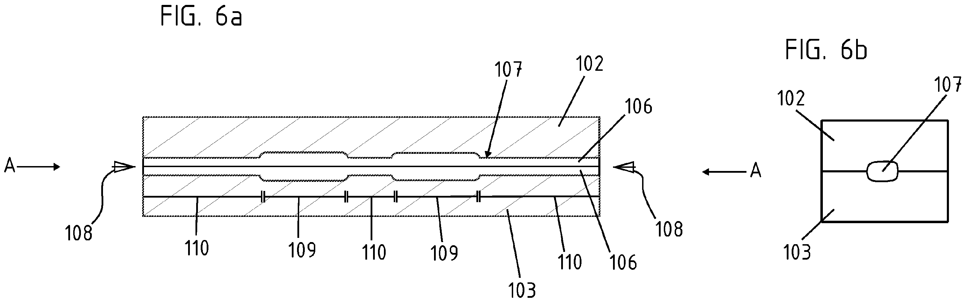

In dem Oberwerkzeug 102 und Unterwerkzeug 103 sind Aussparungen 106 vorgesehen, wobei die Aussparungen bei geschlossenem Stauchwerkzeug, dargestellt in Figur 6a und 6b, einen Formhohlraum 107 ergeben. Der Formhohlraum 107 entspricht längenabschnittsweise der Querschnittskonfiguration des Profilstabes 104 im Ausgangzustand. Dieser weist bevorzugt, wie in Figur 5b dargestellt, eine rechteckige Querschnittsfläche 123 mit abgerundeten Ecken auf. Durch die angedeuteten Stauchwerkzeuge, beispielsweise in Form von Stempeln 108, wird jeweils eine Kraft in Axialrichtung A aufgebracht, so dass der in Figur 6a nicht näher dargestellte Profilstab 104 in Axialrichtung A nach innen gedrückt wird. Vorgesehen sind zwei Längenabschnitte 109 mit vergrößerter Querschnittsfläche, wobei das Material des Profilstabes 104 in einen Spalt zwischen Profilstab 104 und Innenmantelfläche des geschlossenen Formhohlraumes 107 fließt. In den übrigen Längenabschnitten 110 kann die Querschnittskonfiguration mithin die Querschnittsfläche und/oder Querschnittskontur des Profilstabes 104 beibehalten werden oder auch geringfügig verändert werden. Beispielsweise wird die Querschnittsfläche hier vergrößert und/oder die Querschnittskontur geändert. Im Querschnitt ist der zwischen Oberwerkzeug 102 und Unterwerkzeug 103 gebildete Formhohlraum 107, wie in Figur 6b dargestellt, geschlossen.

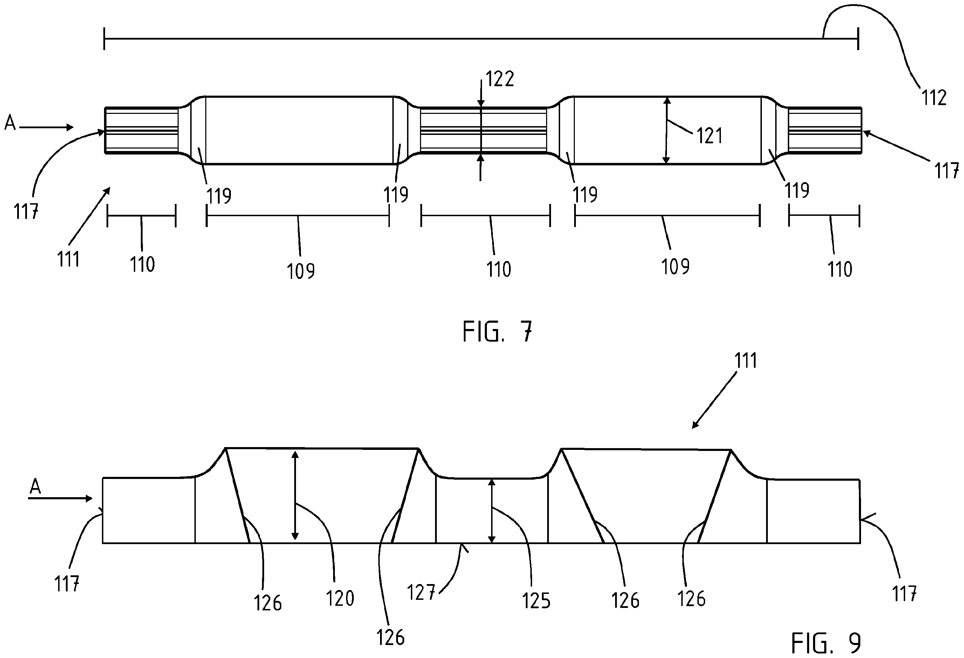

Durch diesen Stauchvorgang wird ein Kettengliedhalbzeug 111 hergestellt, welches in Figur 7 dargestellt ist. Das Kettengliedhalbzeug 111 kann rotationssymmetrisch ausgebildet sein. Das Kettengliedhalbzeug 111 weist in Axialrichtung A Längenabschnitte 109 auf, die eine vergrößerte Querschnittsfläche besitzen. Demgegenüber sind Längenabschnitte 110 vorgesehen, welche keine Änderung der Querschnittskontur und/oder Querschnittsfläche oder eine geringere Änderung der Querschnittskontur und/oder Querschnittsfläche durch den Stauchvorgang erfahren, wobei sich die Querschnittskonfiguration aus einer Querschnittsfläche und Querschnittskontur zusammensetzt.

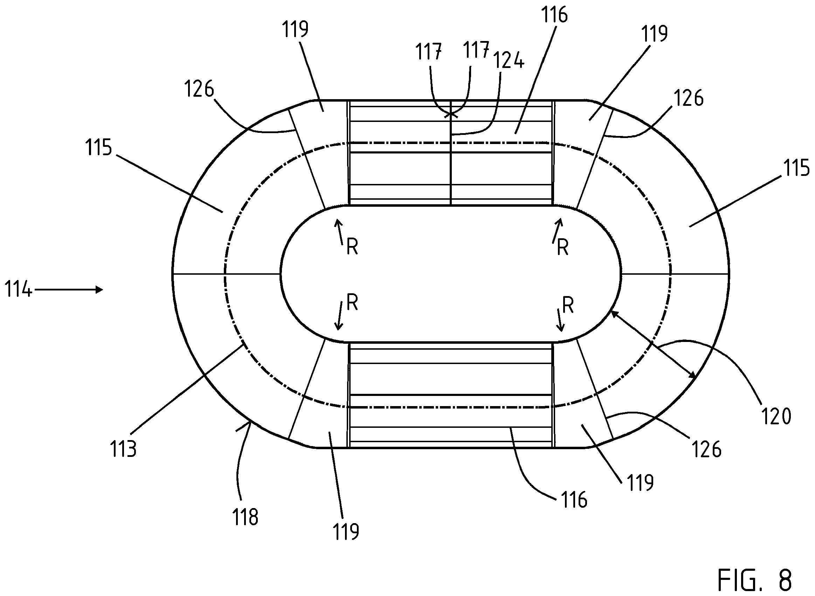

Das Kettengliedhalbzeug 111 weist eine Länge 112 auf, die geringer ist als die Länge 105 des Profilstabes 104. Im Wesentlichen entspricht die Länge 112 des Kettengliedhalbzeuges 111 einer umlaufenden Länge 113 des gemäß Figur 8 durch Umformen, insbesondere Biegen und Schweißen hergestellten Kettengliedes 114. Das Kettenglied 114 kann als Vertikalglied oder auch Horizontalglied ausgebildet sein.

Die Rundungen 115 des Kettengliedes 114 entsprechen dabei den Längenabschnitten 109 mit vergrößerter Querschnittsfläche des Kettengliedhalbzeuges 111. Die Schenkel 116 des Kettengliedes 114 entsprechen den Längenabschnitten 110 mit gleichbleibender und/oder geringfügig geänderter Querschnittskonfigurationen. Eine nicht näher dargestellte Schweißnaht der Stirnseiten 117 des Kettengliedhalbzeuges 111 schließt das Kettenglied 114. Zwischen dem Schenkel 116 und den Rundungen 115 sind Übergangsbereiche 119 ausgebildet. Das Kettenglied kann als zuvor beschriebenes Horizontalglied 2 oder Vertikalglied 3 ausgebildet werden.

Damit ein außen umlaufender Rand 118 des Kettengliedes 114 glatt umläuft, mithin keine wellenförmigen oder stufenförmigen Absätze, beispielsweise im Bereich der in Figur 7 dargestellten Übergangsbereiche 119 hat, kann dies bei Umformung zum Kettenglied 114 ausgeglichen werden. Hierzu kann ein Teil des Materials beim Umformen auf die Radialrichtung R bezogen nach außen verformt werden.

Die Stirnseiten 117 kommen zu Anlage und sind in der Verbindungsstelle 124 miteinander gefügt.

Bevorzugt jedoch wird das in Figur 7 dargestellte Kettengliedhalbzeug 111 derart hergestellt, dass die Längenabschnitte 110 auch beim Stauchen verformt werden und das Kettengliedhalbzeug 111 nicht rotationssymmetrisch gestaucht hergestellt wird. In Figur 9 ist das Kettengliedhalbzeug 111 in dieser bevorzugten Ausführungsvariante um 90° gedreht dargestellt. Eine dargestellte Höhe 120 ist an dem in Figur 8 dargestellten Kettenglied 114 im Bereich der Rundung 115 ausgebildet. Diese Höhe 120 wird gemäß Figur 9 ebenfalls durch den Stauchvorgang in den Längenabschnitten 109 mit vergrößerter Wandstärke durch Stauchen hergestellt.

In den Längenabschnitten 109 wird eine geringere Höhe 125 hergestellt. In den Übergangsbereichen 119 nimmt die Höhe zu bzw. ab. In Seitenansicht gem. Figur 9 wird der Längenabschnitt zur Ausbildung der Übergangsbereiche 119 schräg hergestellt, im Hinblick auf den späteren Umformvorgang. Ein Ende 126 des Übergangsbereiches 119 zum Übergang zur Rundung 115 kann somit optimiert hergestellt werden.

Weiterhin bevorzugt wird das Kettengliedhalbzeug 111 mit einer geraden Außenkante 127, die an dem hergestellten Kettenglied 114 den außen umlaufenden Rand 118 ausbildet, hergestellt.

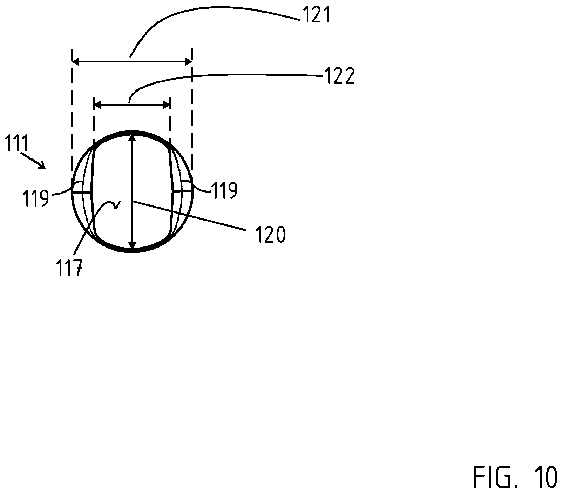

Dargestellt ist dies auch in Figur 10, welche eine Stirnansicht auf das Kettengliedhalbzeug 111 zeigt. Die Breite 121 im Bereich der vergrößerten Wandstärke ist größer als die Breite 122 des Bereiches, welcher als späterer Schenkel 116hergestellt wird. Die Höhe 120 erstreckt sich über die gesamte Länge 112.

### Bezugszeichen:

- 1 -: Gliederkette
- 2 -: Horizontalglied
- 3 -: Vertikalglied
- 4 -: Rundung zu 2
- 5 -: Schenkel zu 2
- 6 -: Ende zu 5
- 7 -: Übergangsbereich zu 2
- 8 -: Querschnittsfläche zu 5
- 9 -: Querschnittsfläche zu 4
- 10 -: Breite zu 5
- 11 -: Breite zu 4
- 12 -: Höhe zu 5
- 13 -: Höhe zu 4
- 14 -: Innenseite zu 5
- 15 -: Seitenfläche zu 5
- 16 -: Hüllkreis zu 8
- 17 -: Schenkel zu 3
- 18 -: Querschnittsfläche zu 17
- 19 -: Querschnittsfläche zu 20
- 20 -: Rundung zu 3
- 21 -: Höhe zu 3
- 22 -: Höhe zu 2
- 23 -: Höhe zu 17
- 24 -: Höhe zu 20
- 25 -: Breite zu 17
- 26 -: Breite zu 20
- 27 -: Mittelebene
- 28 -: Übergangsbereich zu 3
- 29 -: Außenseite zu 5
- 30 -: Hüllkreis zu 18
- 31 -: Ende zu 17
- 32 -: Innenseite
- 33 -: Innenseite
- 34 -: Außenseite
- 35 -: Seitenfläche
- 36 -: Innenseite

- 101 -: Stauchwerkzeug
- 102 -: Oberwerkzeug
- 103 -: Unterwerkzeug
- 104 -: Profilstab
- 105 -: Länge zu 104
- 106 -: Aussparung
- 107 -: Formhohlraum
- 108 -: Stempel
- 109 -: Längenabschnitt
- 110 -: Längenabschnitt
- 111 -: Kettengliedhalbzeug
- 112 -: Länge zu 111
- 113 -: umlaufende Länge zu 114
- 114 -: Kettenglied
- 115 -: Rundung zu 114
- 116 -: Schenkel zu 114
- 117 -: Stirnseite
- 118 -: Rand zu 114
- 119 -: Übergangsbereich
- 120 -: Höhe zu 115
- 121 -: Breite zu 115
- 122 -: Breite zu 116
- 123 -: Querschnittsfläche zu 104
- 124 -: Verbindungsstelle
- 125 -: Höhe zu 116
- 126 -: Ende zu 119
- 127 -: Außenkante
- α -: Winkel zu 7
- β -: Winkel zu 15
- γ -: Winkel zu 20
- A -: Axialrichtung
- B -: Schnittlinie
- R -: Radialrichtung
- δ -: Winkel zu 33
- A-A -: Schnittlinie
- B-B -: Schnittlinie

## Patentansprüche

1. Verfahren zur Herstellung einer Gliederkette (1), insbesondere für den untertägigen Einsatz im Bergbau, wobei die Gliederkette (1) aus einem Stahlwerkstoff hergestellt ist und Kettenglieder (115) als Horizontalglieder (2) und Vertikalglieder (3) aufweist, wobei jedes Horizontalglied (2) und jedes Vertikalglied (3) jeweils parallel zueinander verlaufende Schenkel (5, 17, 116) aufweist, die endseitig über Rundungen (4, 20, 115) miteinander verbunden sind, wobei ein jeder Schenkel (5, 17, 116) eine geringere Querschnittsfläche (8, 18) aufweist, gegenüber der Querschnittsfläche (9, 19) einer jeden Rundung (4, 20, 115) mit folgenden Verfahrensschritten:
- Bereitstellen eines Profilstabs (104), wobei die Querschnittsfläche (123) des Profilstabs kleiner ist als der Nenndurchmesser des herzustellenden Kettengliedes (115),
- Einlegen des Profilstabes (104) in ein Stauchwerkzeug (101) und axiales Stauchen unter längenabschnittsweiser Vergrößerung der Querschnittsfläche, wobei die Querschnittsfläche (9, 19) im Bereich der späteren Rundungen (4, 20, 115) vergrößert wird,
- Entnahme des gestauchten Kettengliedhalbzeuges (111) und Umformen zu einem Kettenglied (115) sowie Verschweißen von stirnseitigen Enden (117) des umgeformten Kettengliedes (115),
**dadurch gekennzeichnet, dass** das Stauchwerkzeug (101) ein Oberwerkzeug (102) und ein Unterwerkzeug (103) aufweist, wobei bei geschlossenem Stauchwerkzeug (101) ein Formhohlraum (107) mit in Längsrichtung des Formhohlraumes (107) verschiedener Querschnittsfläche vorhanden ist, so dass bei einer Stauchbewegung in Axialrichtung (A) das gestauchte Material des Profilstabs (104) in den Raum mit größerer Querschnittsfläche fließt.

2. Verfahren nach Anspruch 1, **dadurch gekennzeichnet, dass** der Formhohlraum (107) zwei Längenabschnitte (109) mit größerer Querschnittsfläche aufweist und im Übrigen eine Querschnittsfläche aufweist, welche der Querschnittsfläche des Stabprofils entspricht oder im Übrigen eine Querschnittsfläche aufweist, die größer ist als die Querschnittsfläche des Profilstabs (104), jedoch kleiner als die Querschnittsfläche in den Längenabschnitten (109) der später herzustellenden Rundungen 115.

3. Verfahren nach einem der Ansprüche 1 oder 2, **dadurch gekennzeichnet, dass** die hergestellten Schenkel (5, 17, 116) eine Querschnittsfläche (8, 18) aufweisen, welche der Querschnittsfläche (123) des Profilstabs (104) entspricht.

4. Verfahren nach einem der Ansprüche 1 bis 3, **dadurch gekennzeichnet, dass** die Querschnittsfläche (8, 18) und/oder Querschnittskontur im Bereich der herzustellenden Schenkel (5, 17, 116) beim Stauchen geändert, insbesondere vergrößert wird.

5. Verfahren nach einem der Ansprüche 1 bis 4, **dadurch gekennzeichnet, dass** der Profilstab (104) einen unrunden Querschnitt (123) aufweist, insbesondere einen rechteckigen Querschnitt (123) mit bevorzugt abgerundeten Ecken.

6. Verfahren nach einem der Ansprüche 1 bis 5, **dadurch gekennzeichnet, dass** der Profilstab (104) im warmen Zustand gestaucht wird.

7. Verfahren nach einem der Ansprüche 1 bis 6, **dadurch gekennzeichnet, dass** das umgeformte und verschweißte Kettenglied (114) vergütet wird.

8. Verfahren nach einem der Ansprüche 1 bis 7, **dadurch gekennzeichnet, dass** zwei Längenabschnitte (109) durch das axiale Stauchen in ihrem Querschnitt vergrößert werden.

9. Verfahren nach einem der Ansprüche 1 bis 8, **dadurch gekennzeichnet, dass** die vergrößerte Querschnittsfläche entlang des Längenabschnittes (109) gleich ist oder dass die vergrößerte Querschnittsfläche entlang des Längenabschnittes (109) variiert.

10. Verfahren nach einem der Ansprüche 1 bis 9, **dadurch gekennzeichnet, dass** der Längenabschnitt (109) mit vergrößerter Querschnittsfläche in seiner Querschnittskontur der Querschnittskontur der herzustellenden Rundung (4, 20, 115) im Wesentlichen entspricht.

11. Verfahren nach einem der Ansprüche 1 bis 10, **dadurch gekennzeichnet, dass** der Querschnitt des Profilstabs (104) auch in den Längenabschnitten (116) verändert wird, die nicht in Ihrer Querschnittsfläche vergrößert werden, wobei die dabei hergestellte Querschnittskontur im Wesentlichen der Querschnittskontur der herzustellenden Schenkel (5, 17, 116) entspricht.

12. Verfahren nach einem der Ansprüche 1 bis 11, **dadurch gekennzeichnet, dass** das Kettengliedhalbzeug (111) mit längenabschnittsweise variierender Querschnittsfläche, jedoch in Längsrichtung mit einer geraden Außenkante (127) durch Stauchen hergestellt wird.

13. Verfahren nach einem der Ansprüche 1 bis 12, **dadurch gekennzeichnet, dass** das Kettengliedhalbzeug (111) rotationssymmetrisch gestaucht wird oder dass das Kettengliedhalbzeug (111) im Querschnitt rotations a symmetrisch gestaucht wird.

## Claims

1. Method for producing a link chain (1), in particular for underground use in mining, wherein the link chain (1) is produced from a steel material and has chain links (115) as horizontal links (2) and vertical links (3), wherein each horizontal link (2) and each vertical link (3) respectively have limbs (5, 17, 116) that run parallel to one another and are connected to one another at the ends by rounded portions, (4, 20, 115), wherein each limb (5, 17, 116) has a smaller cross-sectional area (8, 18) compared to the cross-sectional area (9, 19) of each rounded portion (4, 20, 115) with the following method steps:
- Providing a profiled bar (104), wherein the cross-sectional area (123) of the profiled bar is smaller than the nominal diameter of the chain link (115) to be produced,
- Inserting the profiled bar (104) into a compression tool (101) and axially compressing the cross-sectional area by lengthwise enlargement, wherein the cross-sectional area (9, 19) is enlarged in the region of the subsequent rounded portions (4, 20, 115),
- Removing the compressed semi-finished chain link product (111) and forming it into a chain link (115) and welding the end-side ends (117) of the deformed chain link (115),
**characterised in that** the compression tool (101) has an upper tool (102) and a lower tool (103), wherein when the compression tool (101) is closed, there is a mould cavity (107) with a cross-sectional area that is different in the longitudinal direction of the mould cavity (107), so that the compressed material of the profiled bar (104) flows into the space with a larger cross-sectional area during a compression movement in the axial direction (A).

2. Method according to claim 1, **characterised in that** the mould cavity (107) has two longitudinal sections (109) with a larger cross-sectional area and otherwise has a cross-sectional area which corresponds to the cross-sectional area of the bar profile or otherwise has a cross-sectional area that is larger than the cross-sectional area of the profiled bar (104), but smaller than the cross-sectional area in the longitudinal sections (109) of the rounded portions (115) to be produced subsequently.

3. Method according to any one of claims 1 or 2, **characterised in that** the limbs (5, 17, 116) produced have a cross-sectional area (8, 18) which corresponds to the cross-sectional area (123) of the profiled bar (104).

4. Method according to any one of claims 1 to 3, **characterised in that** the cross-sectional area (8, 18) and/or cross-sectional contour in the region of the limbs (5, 17, 116) to be produced is changed, in particular enlarged, during compression.

5. Method according to any one of claims 1 to 4, **characterised in that** the profiled bar (104) has a non-circular cross-section (123), in particular a rectangular cross-section (123) with preferably rounded corners.

6. Method according to any one of claims 1 to 5, **characterised in that** the profiled bar (104) is compressed in the warm state.

7. Method according to any one of claims 1 to 6, **characterised in that** the deformed and welded chain link (114) is tempered.

8. Method according to any one of claims 1 to 7, **characterised in that** two longitudinal sections (109) are enlarged in their cross section by the axial compression.

9. Method according to any one of claims 1 to 8, **characterised in that** the enlarged cross-sectional area is the same along the longitudinal section (109) or **in that** the enlarged cross-sectional area varies along the longitudinal section (109).

10. Method according to any one of claims 1 to 9, **characterised in that** the longitudinal section (109) with enlarged cross-sectional area essentially corresponds in its cross-sectional contour to the cross-sectional contour of the rounded portions (4, 20, 115) to be produced.

11. Method according to any one of claims 1 to 10, **characterised in that** the cross section of the profiled bar (104) also changes in the longitudinal sections (116) which are not enlarged in their cross-sectional area, wherein the cross-sectional contour produced thereby corresponds essentially to the cross-sectional contour of the limbs (5, 17, 116) to be produced.

12. Method according to any one of claims 1 to 11, **characterised in that** the semi-finished chain link product (111) having a cross-sectional area, which varies lengthwise, is however produced with a straight outer edge (127) in the longitudinal direction by compression.

13. Method according to any one of claims 1 to 12, **characterised in that** the semi-finished chain link product (111) is compressed rotationally symmetrically or **in that** the semi-finished chain link product (111) is compressed rotationally symmetrically in the cross section.

## Revendications

1. Procédé de fabrication d'une chaîne à maillons (1), en particulier pour la mise en œuvre souterraine en exploitation minière, dans lequel la chaîne à maillons (1) est constituée d'un matériau à base d'acier et présente des maillons de chaîne (115) sous la forme de maillons horizontaux (2) et de maillons verticaux (3), dans lequel chaque maillon horizontal (2) et chaque maillon vertical (3) présentent respectivement des branches (5, 17, 116) s'étendant parallèlement l'une à l'autre et qui sont reliées l'une à l'autre côté extrémité via des arrondis (4, 20, 115), dans lequel chaque branche respective (5, 17, 116) présente une surface en coupe transversale plus petite (8, 18) par rapport à la surface en coupe transversale (9, 19) de chaque arrondi respectif (4, 20, 115), avec les étapes de procédé suivantes consistant à :
- fournir une barre profilée (104), dans lequel la surface en coupe transversale (123) de la barre profilée est plus petite que le diamètre nominal du maillon de chaîne à fabriquer (115),
- insérer la barre profilée (104) dans un outil de refoulement (101) et la refouler axialement en agrandissant la surface en coupe transversale en section longitudinale, dans lequel la surface en coupe transversale (9, 19) est agrandie dans la zone des arrondis ultérieurs (4, 20, 115),
- retirer le semi-produit de maillon de chaîne refoulé (111) et le façonner en un maillon de chaîne (115) ainsi que souder les extrémités avant (117) du maillon de chaîne façonné (115),
**caractérisé en ce que** l'outil de refoulement (101) présente un outil supérieur (102) et un outil inférieur (103), dans lequel, lorsque l'outil de refoulement (101) est fermé, il se forme une empreinte (107) avec une surface en coupe transversale inégale dans la direction longitudinale de l'empreinte (107) en sorte que, lors d'un mouvement de refoulement dans la direction axiale (A), le matériau refoulé de la barre profilée (104) s'écoule dans l'espace avec une surface en coupe transversale plus grande.

2. Procédé selon la revendication 1, **caractérisé en ce que** l'empreinte (107) présente deux sections longitudinales (109) avec une surface en coupe transversale plus grande et présente dans le reste une surface en coupe transversale qui correspond à la surface en coupe transversale du profil de la barre ou présente dans le reste une surface en coupe transversale qui est plus grande que la surface en coupe transversale de la barre profilée (104), mais est plus petite que la surface en coupe transversale dans les sections longitudinales (109) des arrondis (115) à fabriquer ultérieurement.

3. Procédé selon l'une quelconque des revendications 1 ou 2, **caractérisé en ce que** les branches fabriquées (5, 17, 116) présentent une surface en coupe transversale (8, 18) qui correspond à la surface en coupe transversale (123) de la barre profilée (104).

4. Procédé selon l'une quelconque des revendications 1 à 3, **caractérisé en ce que** la surface en coupe transversale (8, 18) et/ou le contour en coupe transversale est ou sont modifié, en particulier agrandis, dans la zone des branches à fabriquer (5, 17, 116) lors du refoulement.

5. Procédé selon l'une quelconque des revendications 1 à 4, **caractérisé en ce que** la barre profilée (104) présente une section transversale non arrondie (123), en particulier une section transversale rectangulaire (123) avec des angles de préférence arrondis.

6. Procédé selon l'une quelconque des revendications 1 à 5, **caractérisé en ce que** la barre profilée (104) est refoulée à chaud.

7. Procédé selon l'une quelconque des revendications 1 à 6, **caractérisé en ce que** le maillon de chêne façonné et soudé (114) est traité.

8. Procédé selon l'une quelconque des revendications 1 à 7, **caractérisé en ce que** deux sections longitudinales (109) sont agrandies en coupe transversale par le refoulement axial.

9. Procédé selon l'une quelconque des revendications 1 à 8, **caractérisé en ce que** la surface en coupe transversale agrandie est égale le long de la section longitudinale (109) ou la surface en coupe transversale agrandie varie le long de la section longitudinale (109).

10. Procédé selon l'une quelconque des revendications 1 à 9, **caractérisé en ce que** la section longitudinale (109) avec une surface en coupe transversale agrandie correspond sensiblement dans son contour en coupe transversale au contour en coupe transversale de l'arrondi à fabriquer (4, 20, 115).

11. Procédé selon l'une quelconque des revendications 1 à 10, **caractérisé en ce que** la section transversale de la barre profilée (104) est également modifiée dans les sections longitudinales (116) qui ne sont pas agrandies dans leur surface en coupe transversale, dans lequel le contour en coupe transversale ainsi fabriqué correspond sensiblement au contour en coupe transversale des branches à fabriquer (5, 17, 116).

12. Procédé selon l'une quelconque des revendications 1 à 11, **caractérisé en ce que** le semi-produit de maillon de chaîne (111) est fabriqué par refoulement avec une surface en coupe transversale variant en section longitudinale, mais avec une arête externe droite (127) en direction longitudinale.

13. Procédé selon l'une quelconque des revendications 1 à 12, **caractérisé en ce que** le semi-produit de maillon de chaîne (111) est refoulé en symétrie de rotation ou le semi-produit de maillon de chaîne (111) est refoulé en asymétrie de rotation en coupe transversale.
